# FASCICULE DE BREVET EUROPEEN

(11) **EP 1 191 657 B1**
(45) Date de publication et mention de la délivrance du brevet: **21.07.2010**
(21) Numéro de dépôt: 01402363.4
(22) Date de dépôt: 13.09.2001
(51) Int. Cl.: H02G 3/32, H02G 3/04

(54) **Dispositif de fixation d'une goulotte sur un support décalé par rapport à un mur**
Vorrichtung zur Befestigung eines Kabelkanals auf einem von einer Wand versetzten Sockel
Apparatus for mounting a wireway on a support which is offset relative to a wall

(30) Priorité: 21.09.2000 FR 0012032
(43) Date de publication de la demande: 27.03.2002
(73) Titulaire: LEGRAND, 87000 Limoges (FR); Legrand SNC, 87000 Limoges (FR)
(72) Inventeur: Rayon, Jacky, 53600 Voutre (FR)
(74) Mandataire: Santarelli

(56) Documents cités:
- EP-A- 1 026 804
- DE-A- 3 239 231
- FR-A- 1 399 871

## Description

La présente invention concerne un dispositif de fixation rapide d'une goulotte sur un support propre à permettre la pose de la goulotte de manière décalée par rapport à un mur.

Un tel support peut notamment faire partie d'un habillage d'un appareil de chauffage plaqué contre le mur, tel qu'un radiateur ou autre, la goulotte devant être alors fixée sur cet habillage pour courir devant le radiateur, en étant décalée par rapport au mur.

Il peut constituer également une console fixée sur le mur et à distance du sol.

Il est connu de fixer une goulotte sur un tel support par l'intermédiaire de vis.

Une fixation par vissage est décrite dans le document EP 0 579 929 qui prévoit un support en U à fixer contre le mur ou une paroi, ce support étant pourvu de crochets aptes à maintenir en place une goulotte contre le support durant son vissage.

Il existe également des dispositifs spécifiquement prévus pour des goulottes dont les socles présentent, sur leur face externe, une ou plusieurs rainures propres à permettre une fixation rapide par encliquetage.

Par ailleurs, il est connu du document FR 2 416 577 un dispositif de fixation rapide d'une goulotte pourvue d'entailles transversales, sur une platine perforée.

Ce dispositif de fixation se présente sous la forme d'une fourche élastique entre les bras de laquelle sont disposées des languettes élastiques qui appliquent le fond des entailles de la goulotte contre les crochets portés par les bras.

Ce dispositif de fixation comprend, en outre, des dents d'encliquetage qui coopèrent avec les perforations de la platine.

Un tel dispositif de fixation, outre le fait qu'il est relativement complexe, nécessite de prévoir des entailles transversales dans la goulotte à fixer par son intermédiaire.

Enfin, on connaît du document EP 0 505 748 un dispositif de fixation d'une goulotte sur une paroi qui comprend une sorte de bride venant enserrer les parois du socle de la goulotte et comportant à une extrémité un couvercle monté pivotant et destiné à venir se crocheter dans un crochet prévu à l'extrémité opposée de la bride.

Une telle bride est fixée sur un mur ou sur une paroi à l'aide d'une vis et, de ce fait, elle ne peut pas être considérée comme un dispositif de fixation rapide.

Par rapport à l'état de la technique précité, l'invention propose un nouveau dispositif de fixation d'une goulotte sur un support propre à permettre la pose de la goulotte de manière décalée par rapport à un mur, caractérisé en ce qu'il comporte :
- une console apte à être crochetée en façade sur le support et destinée à recevoir en appui ladite goulotte, et
- une coiffe pourvue de moyens de positionnement et de montage par enclenchement élastique dans au moins un orifice prévu sur le support.

Un tel dispositif de fixation présente l'avantage d'être simple et rapide à mettre en oeuvre tout en assurant une fixation complète et sûre de la goulotte. Il permet également avantageusement la fixation de goulottes de différentes largeurs grâce à une conception en deux pièces distinctes.

D'autres caractéristiques non limitatives et avantageuses du dispositif de fixation conforme à l'invention sont les suivantes :
- lesdits moyens de positionnement et de montage sont agencés de manière que ladite coiffe est apte à être positionnée sur le support en position de réception d'une goulotte en étant orientée vers le haut dans l'alignement du support et à être translatée vers le bas, après la mise en appui de la goulotte sur la console, pour s'enclencher élastiquement dans le support en se positionnant contre ladite goulotte de façon à ce que cette dernière soit enserrée entre la coiffe et la console ;
- lesdits moyens de positionnement et de montage comprennent une branche élastique prévue à l'arrière de la coiffe et articulée, par l'intermédiaire d'une charnière solidaire de la coiffe, entre une position stable déployée et une position rabattue pour son introduction dans ledit orifice du support ;
- ladite branche élastique comporte, d'une part, à sa base, à proximité de la charnière d'articulation, une saillie destinée à coopérer en butée avec un bord dudit orifice du support pour maintenir ladite coiffe en position de réception de la goulotte, et, d'autre part, à son extrémité libre, un retour en forme de coin destiné à venir se plaquer contre le bord dudit orifice du support pour bloquer ladite coiffe en position contre la goulotte de façon à ce que cette dernière soit enserrée entre la coiffe et la console ;
- ladite saillie est un bossage formé dans ladite branche élastique ;
- ladite branche élastique et sa charnière d'articulation font partie d'une agrafe rapportée sur une partie arrière de la coiffe ;
- ladite agrafe est encliquetée sur la coiffe ;
- la coiffe comprend, à l'avant, un rebord destiné à s'appliquer contre un retour en équerre d'une aile latérale de la goulotte, et, à l'arrière, trois pattes disposées en podium, avec une patte centrale portant les moyens de positionnement et de montage et destinée à s'engager dans l'orifice du support, et, de part et d'autre de cette patte centrale, deux pattes latérales destinées à venir se positionner contre ledit support ;
- lesdits moyens de positionnement et de montage sont agencés de manière que ladite coiffe est apte à être positionnée sur le support en position de réception d'une goulotte en étant orientée vers le haut suivant une direction générale oblique par rapport au support, et à être basculée vers le bas sous la sollicitation de la goulotte placée en appui sur la console, pour s'enclencher élastiquement dans le support en se positionnant contre ladite goulotte de façon à ce que cette dernière soit enserrée entre la coiffe et la console ;
- lesdits moyens de positionnement et de montage comprennent, à l'arrière de la coiffe, une patte de positionnement en forme de marche d'escalier destinée à venir se bloquer dans un premier orifice d'une première partie du support, et, à distance de cette patte de positionnement, une agrafe élastique de verrouillage destinée, lors du basculement de la coiffe, à s'introduire par déformation élastique dans un deuxième orifice d'une deuxième partie du support perpendiculaire à ladite première partie, pour venir en butée à l'intérieur du support ;
- la patte de positionnement et l'agrafe élastique viennent de formation avec ladite coiffe ;
- la console et la coiffe sont réalisées en matière métallique ; et
- la console et la coiffe sont réalisées en matière plastique.

La description qui va suivre en regard des dessins annexés donnés à titre d'exemples non limitatifs, fera bien comprendre en quoi consiste l'invention et comment elle peut être réalisée.

Sur les dessins annexés :
- la figure 1 est une vue en perspective éclatée du dispositif de fixation selon l'invention ;
- la figure 2 est une vue de dessous de la console du dispositif de fixation de la figure 1 ;
- la figure 3 est une en perspective arrière de la coiffe du dispositif de fixation de la figure 1 ;
- la figure 4 est une vue en coupe longitudinale de l'agrafe de fixation du dispositif de fixation de la figure 1 ;
- les figures 5a à 5c représentent, vues en coupe transversale, les trois étapes essentielles de fixation de la goulotte sur un support à l'aide du dispositif de fixation de la figure 1 ;
- les figures 6a et 6b représentent, vu en perspective avant et en coupe transversale, un autre mode de réalisation du dispositif de fixation selon l'invention, dans une première étape de mise en oeuvre sur un support propre à recevoir une goulotte ;
- les figures 7a et 7b représentent, vu en perspective avant et en coupe transversale, le dispositif de fixation représenté sur les figures 6a et 6b, dans une deuxième étape de mise en oeuvre pour la fixation de la goulotte sur le support.

En préliminaire, on notera que, d'un mode de réalisation à l'autre représenté sur les différentes figures, les parties identiques ou similaires seront dans la mesure du possible référencées par les mêmes signes de référence et ne seront pas décrites à chaque fois.

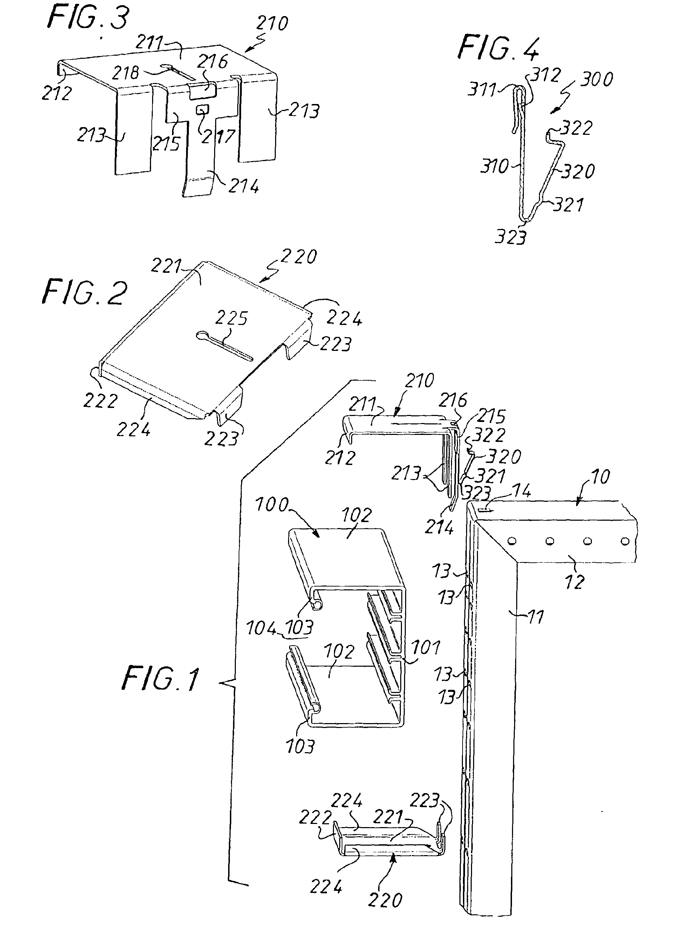

Sur les figures 1, 2, 3, 4, 5a à 5c, on a représenté un dispositif de fixation d'une goulotte 100 sur un support 10 propre à permettre la pose de la goulotte 100 de manière décalée par rapport à un mur (ici non représenté).

Ici, le support 10 est un pied qui comprend une première partie horizontale 12 à fixer sur le mur et une deuxième partie verticale 11 venant s'appuyer sur le sol.

Bien entendu, on pourrait prévoir que ce support 10 soit une console fixée au mur à distance du sol ou tout autre support.

De manière connue en soi, la goulotte 100 présente ici un socle à section en U avec un fond 101 destiné à venir s'appliquer contre la partie verticale 11 du support 10 et deux ailes latérales en regard 102 présentant, à leur extrémité libre, des retours en équerre 103 formant des gorges d'accrochage d'un couvercle de fermeture non représenté.

Entre les deux retours en équerre 103 dirigés l'un vers l'autre, il est défini une ouverture 104 pour la mise en place des conducteurs ou câbles électriques ainsi que pour le montage d'appareillages électriques à raccorder auxdits conducteurs ou câbles électriques.

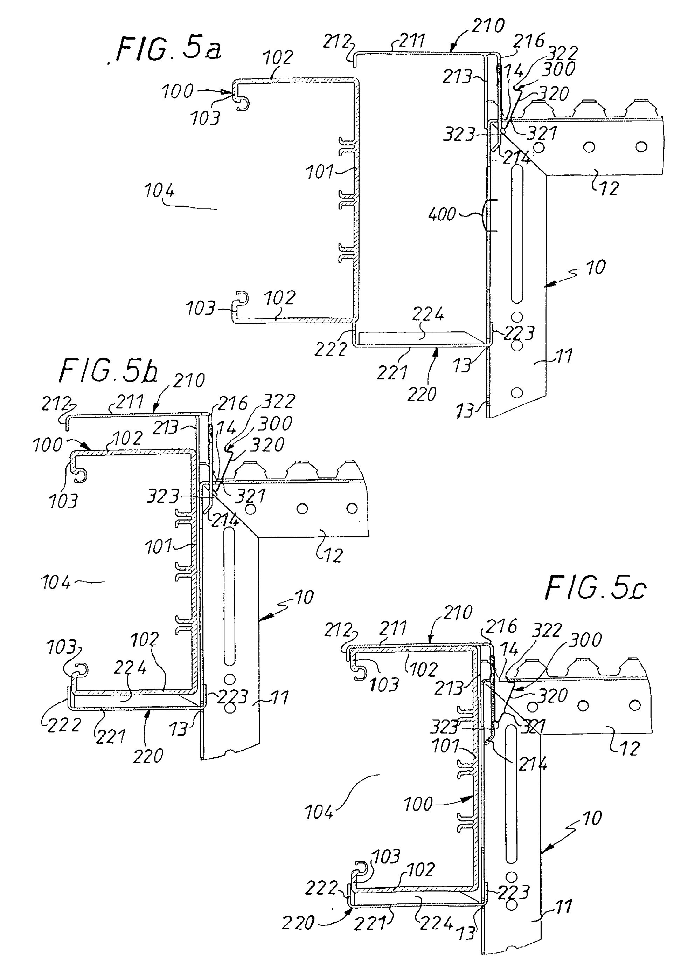

Le dispositif de fixation représenté sur ces figures comporte une console 220 apte à être crochetée en façade sur le support 10 et destinée à recevoir en appui la goulotte 100 (voir figures 5a à 5c).

Ici, cette console 220 comporte une base support 221 pourvue, à l'avant, d'un rebord 222 destiné à s'appliquer contre un retour en équerre 103 d'une aile latérale 102 de la goulotte 100, sur les côtés latéraux, de rebords latéraux 224 et, à l'arrière, de deux crochets 223 destinés à s'engager dans des orifices 13 prévus sur la partie verticale 11 du support 10, de sorte que ces crochets 223 viennent se plaquer contre la face intérieure de ladite partie verticale 11 du support 10, en s'appuyant contre un bord inférieur des orifices 13 de manière à retenir en porte à faux ladite console 220 sur le support (voir figures 5a à 5c).

On notera que la partie verticale 11 du support présente plusieurs paires d'orifices 13 pour le crochetage de la console 220 à différentes hauteurs afin d'adapter le dispositif de fixation à la largeur de la goulotte qu'il reçoit.

Le dispositif de fixation représenté comporte également une coiffe 210 pourvue de moyens de positionnement et de montage 300 par enclenchement élastique dans au moins un orifice 14 prévu sur le support 10.

Selon le mode de réalisation représenté sur les figures 1 à 4 et 5a à 5c, les moyens de positionnement et de montage 300 comprennent une branche élastique 320 prévue à l'arrière de la coiffe 210 (voir figure 1) et articulée, par l'intermédiaire d'une charnière d'articulation 323 solidaire de la coiffe 210, entre une position stable déployée (voir figure 1) et une position rabattue contre ladite coiffe 210 pour son introduction dans l'orifice 14 du support 10.

Ici, cet orifice 14 est prévu à proximité de la façade du support sur la partie horizontale 12 dudit support 10.

La branche élastique 320 comporte, d'une part, à sa base, à proximité de la charnière d'articulation 323, une saillie 321 destinée à coopérer en butée avec un bord dudit orifice 14 du support 10 pour maintenir la coiffe 210 en position de réception de la goulotte 100, et, d'autre part, à son extrémité libre, un retour en forme de coin 322 destiné à venir se plaquer contre le bord dudit orifice 14 du support 10 pour bloquer la coiffe 210 en position contre la goulotte 100 de façon à ce que cette dernière soit enserrée entre la coiffe 210 et le console 220 (voir figure 5c).

Cette saillie est un bossage 321 formé dans ladite branche élastique 320.

Comme le montre plus particulièrement la figure 4, la branche élastique 320 et sa charnière d'articulation 323 font partie d'une agrafe 300 à rapporter sur une partie arrière 215 de la coiffe 210.

Plus particulièrement cette agrafe 300 est encliquetée dans des orifices 216, 217 de la coiffe 210.

Cette coiffe 210 (voir figure 3) comprend une plaque de base 211 pourvue, à l'avant, d'un rebord 212 destiné à s'appliquer contre un retour en équerre 103 d'une aile latérale 102 de la goulotte 100, et, à l'arrière, de trois pattes 213, 214 disposées en podium, avec une patte centrale 214 en retrait par rapport à deux pattes latérales 213 portant les moyens de positionnement et de montage destinés à s'engager dans l'orifice 14 du support, et, de part et d'autre de cette patte centrale 214, les deux pattes latérales 213 destinées à venir se positionner contre la partie verticale 11 du support 10.

Plus particulièrement, la patte centrale 214 comporte, en partie supérieure, une portion élargie 215 logeant deux orifices superposés 216, 217 permettant l'encliquetage de l'agrafe 300.

A cet effet, l'agrafe 300 comporte une branche de montage 310 venant prolonger la charnière d'articulation 323 formée par un coude.

Cette branche de montage 310 comporte, à son extrémité libre, une portion recourbée en forme de pince 311 venant s'appuyer sur une dent d'encliquetage élastique 312. La pince 311 est destinée à s'engager dans l'orifice 216 jusqu'à ce que la dent d'encliquetage élastique 312 s'encliquète dans l'orifice 217 de la coiffe 210.

Ainsi, comme le montrent plus particulièrement les figures 5a et 5b, l'agrafe 300 formant les moyens de positionnement et de montage de la coiffe permet de positionner la coiffe 210 sur le support 10 en position de réception de la goulotte 100 en étant orientée vers le haut dans l'alignement du support. Dans cette position de réception, le bossage 321 de la branche élastique 320 introduite dans l'orifice 14 du support 10 est bloqué sur le bord dudit orifice 14.

Puis, comme le montre plus particulièrement la figure 5c, la coiffe 210 peut être translatée vers le bas en direction de la console 220 préalablement crochetée dans les orifices 13 du support 10, après la mise en appui de la goulotte 100 sur la console 220, pour enclencher élastiquement l'agrafe 300 dans l'orifice 14 du support 10 en positionnant la coiffe 210 contre la goulotte 100 de façon à ce que cette dernière soit enserrée entre la coiffe 210 et la console 220.

Lors de l'enclenchement élastique, la branche élastique 320 de l'agrafe 300 a été plaquée contre la coiffe 210 pour pouvoir s'introduire dans l'orifice 14 jusqu'au moment où son extrémité libre, en forme de coin 322, vienne se bloquer contre le bord de l'orifice 14 du support 10 et contre la face intérieure adjacente dudit support 10.

Dans cette position, la coiffe 210 est en position stable sur le support et la goulotte 100 est maintenue fermement entre les deux pièces 210, 220 du dispositif de fixation.

Elle repose, en partie inférieure, contre les ailes latérales 224 de la console 220 et elle est bloquée à l'avant par, d'une part, le rebord 222 de la console 220 et, d'autre part, le rebord 212 de la coiffe 210.

Il est à noter que la plaque de base 211 de la coiffe 210 et la base support 221 de la console 220 sont pourvues de fentes traversantes 218, 225 se terminant chacune par un orifice de diamètre supérieur à la largeur de ladite fente, dans lesquelles il est possible de mettre en place des cales (non représentées) pour adapter la distance prévue entre ladite coiffe 210 et ladite console 220 à des goulottes de moindre épaisseur afin que celles-ci soient maintenues fermement entre lesdites pièces 210, 220 du dispositif de fixation.

En outre, comme le montre plus particulièrement la figure 5a, on peut prévoir d'utiliser un ressort de compensation 400 globalement en forme de U et positionné sur la face avant de la partie verticale 11 du support 10, contre laquelle est destiné à venir s'appliquer le fond 101 du socle de la goulotte 100.

Les branches du ressort de compensation 400 sont engagées dans lesdits orifices 13 de la partie verticale 11 du support 10.

Ce ressort de compensation 400 est généralement placé à mi-hauteur entre la coiffe 210 et la console 220.

Le ressort de compensation 400 permet avantageusement de s'affranchir des variations de profondeur ou d'épaisseur des différentes goulottes dont le fond du socle vient en appui contre ledit ressort.

Le ressort de compensation 400 est particulièrement utile pour compenser le jeu existant entre la goulotte et la partie verticale du support lorsque, comme cela est représenté sur la figure 5a, la coiffe 210 comprend des pattes latérales 213 destinées à venir se positionner contre la face avant de la partie verticale 11 du support 10, alors que la console 220 est crochetée sur la face arrière de cette partie verticale 11.

Dans le cas d'une utilisation de cales, comme explicité ci-dessus, le ressort de compensation 400 sera plutôt positionné sur la partie verticale 11 du support 10, à proximité de la console 220 de sorte que ladite cale positionnée dans la fente de ladite console vienne en appui contre ledit ressort de compensation.

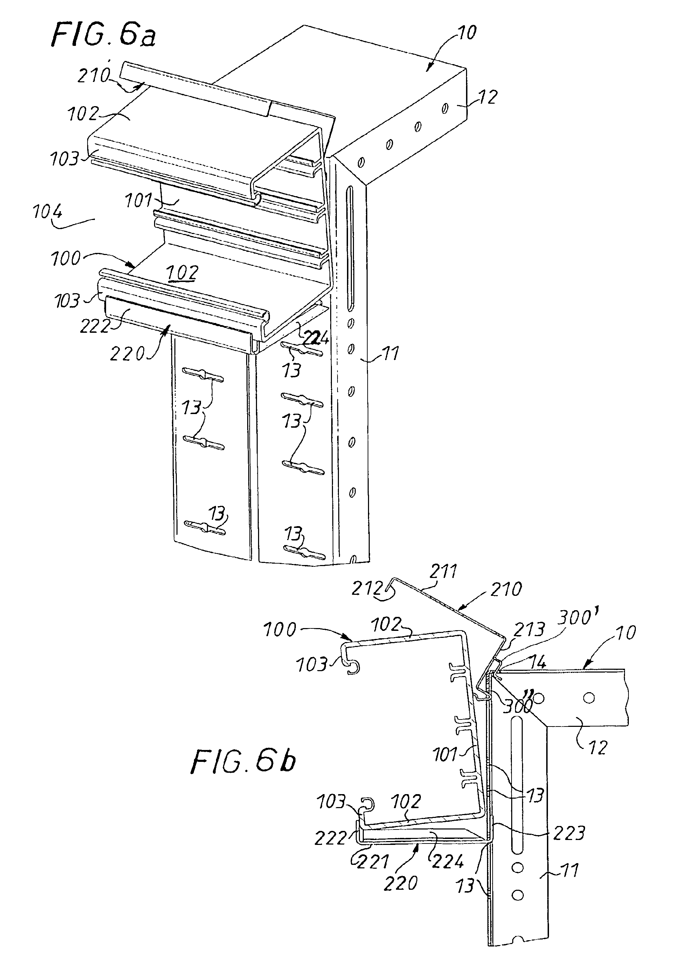

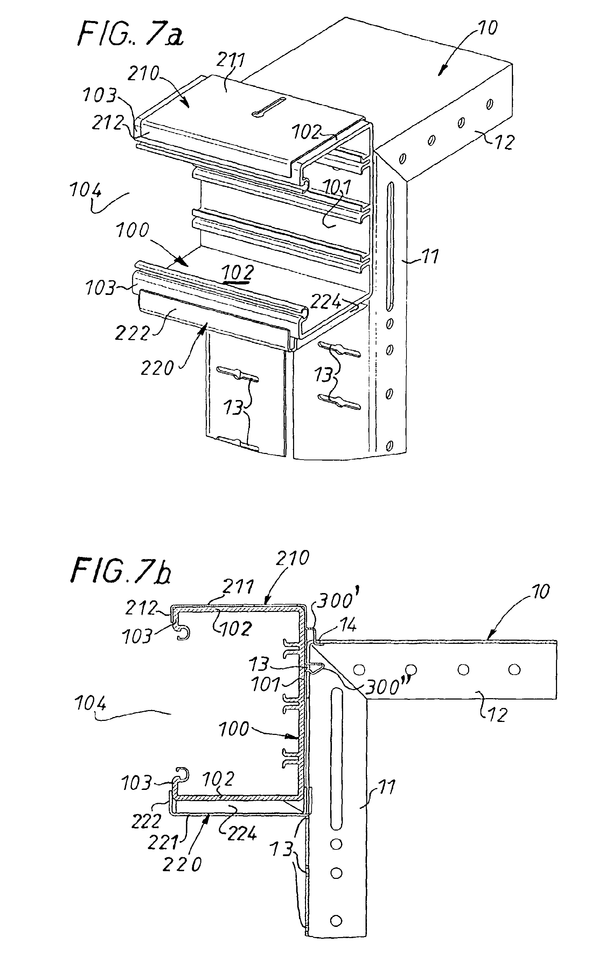

Sur les figures 6a, 6b et 7a, 7b, on a représenté une variante de réalisation du dispositif de fixation selon l'invention qui comprend une console 220 identique à celle du mode de réalisation précédent.

Ce dispositif de fixation comprend également une coiffe 210 qui présente, comme différence essentielle avec celle décrite précédemment, des moyens de positionnement 300' et de montage 300" agencés de manière que la coiffe 210 est apte à être positionnée sur le support 10 en position de réception d'une goulotte 100, en étant orientée vers le haut suivant une direction générale oblique par rapport au support 10 (voir figures 6a et 6b), et à être basculée vers le bas sous la sollicitation de la goulotte 100 placée en appui sur la console 220, pour s'enclencher élastiquement sur le support 10 en se positionnant contre la goulotte 100 de façon à ce que cette dernière soit enserrée entre la coiffe 210 et la console 220 (voir figures 7a et 7b).

Ici aussi, le support 10 est un pied avec une première partie horizontale 12 à fixer au mur et une deuxième partie verticale 11 s'appuyant sur le sol.

La coiffe 210 comporte, à l'arrière, au moins une paroi 213 destinée à venir s'appliquer contre le support 10 lors de sa mise en place sur ce dernier, cette paroi 213 portant les moyens de positionnement 300' et de montage 300" sur le support 10.

Ces moyens de positionnement 300' et de montage 300" comprennent au moins une patte de positionnement 300' en forme de marche d'escalier destinée à se bloquer dans un premier orifice 14 prévu sur la première partie horizontale 12 du support 10, et, à distance de cette patte de positionnement 300', au moins une agrafe élastique de verrouillage 300" prévue à l'extrémité libre de ladite paroi 213 de la coiffe 210, cette agrafe élastique de verrouillage 300" étant destinée, lors du basculement de la coiffe 210 de l'arrière vers l'avant, à s'introduire par déformation élastique dans un deuxième orifice 13 de la façade de la deuxième partie verticale 11 du support 10, pour venir en butée à l'intérieur du support 10 (voir figure 7b).

La patte de positionnement 300' et l'agrafe élastique de verrouillage 300" viennent de formation avec ladite coiffe.

Selon les modes de réalisation du dispositif de fixation représenté sur l'ensemble des figures, la console 220 et la coiffe 210 sont réalisées en matière métallique, par exemple une tôle métallique, mais on pourrait prévoir en variante qu'elles soient réalisées en matière plastique.

La présente invention n'est nullement limitée au mode de réalisation décrit et représenté, mais l'homme du métier saura y apporter toute variante conforme à son esprit.

Par exemple, on pourrait prévoir, en variante du mode de réalisation représenté sur les figures 1 à 5c, que la branche élastique et sa charnière forment une seule pièce avec la coiffe du dispositif de fixation.

## Revendications

1. Dispositif de fixation d'une goulotte (100) sur un support (10) propre à permettre la pose de la goulotte de manière décalée par rapport à un mur, **caractérisé en ce qu'**il comporte :
- une console (220) apte à être crochetée en façade sur le support (10) et destinée à recevoir en appui ladite goulotte (100), et
- une coiffe (210) pourvue de moyens de positionnement et de montage (300) par enclenchement élastique dans au moins un orifice (14) prévu sur le support (10).

2. Dispositif selon la revendication 1, **caractérisé en ce que** lesdits moyens de positionnement et de montage (300) sont agencés de manière que ladite coiffe (210) est apte à être positionnée sur le support (10) en position de réception d'une goulotte (100) en étant orientée vers le haut dans l'alignement du support (10) et à être translatée vers le bas, après la mise en appui de la goulotte (100) sur la console (220), pour s'enclencher élastiquement dans le support (10) en se positionnant contre ladite goulotte de façon à ce que cette dernière soit enserrée entre la coiffe (210) et la console (220).

3. Dispositif selon l'une des revendications 1 ou 2, **caractérisé en ce que** lesdits moyens de positionnement et de montage comprennent une branche élastique (320) prévue à l'arrière de la coiffe (210) et articulée, par l'intermédiaire d'une charnière d'articulation (323) solidaire de la coiffe (210), entre une position stable déployée et une position rabattue pour son introduction dans ledit orifice (14) du support (10).

4. Dispositif selon la revendication 3, **caractérisé en ce que** ladite branche élastique (320) comporte, d'une part, à sa base, à proximité de la charnière d'articulation (323), une saillie (321) destinée à coopérer en butée avec un bord dudit orifice (14) du support (10) pour maintenir ladite coiffe (210) en position de réception de la goulotte, et, d'autre part, à son extrémité libre, un retour en forme de coin (322) destiné à venir se plaquer contre le bord dudit orifice (14) du support (10) pour bloquer ladite coiffe (210) en position contre la goulotte (100) de façon à ce que cette dernière soit enserrée entre la coiffe (210) et la console (220).

5. Dispositif selon la revendication 4, **caractérisé en ce que** ladite saillie est un bossage (321) formé dans ladite branche élastique (320).

6. Dispositif selon l'une des revendications 3 à 5, **caractérisé en ce que** ladite branche élastique (320) et sa charnière d'articulation (323) font partie d'une agrafe (300) rapportée sur une partie arrière de la coiffe (210).

7. Dispositif selon la revendication 6, **caractérisé en ce que** ladite agrafe (300) est encliquetée sur la coiffe (210).

8. Dispositif selon l'une quelconque des revendications précédentes, **caractérisé en ce que** la coiffe (210) comprend, à l'avant, un rebord (212) destiné à s'appliquer contre un retour en équerre (103) d'une aile latérale (102) de la goulotte (100), et, à l'arrière, trois pattes (213, 214) disposées en podium, avec une patte centrale (214) portant les moyens de positionnement et de montage (300) et destinée à s'engager dans l'orifice (14) du support (10), et, de part et d'autre de cette patte centrale (214), deux pattes latérales (213) destinées à venir se positionner contre ledit support (10).

9. Dispositif selon la revendication 1, **caractérisé en ce que** lesdits moyens de positionnement (300') et de montage (300") sont agencés de manière que ladite coiffe (210) est apte à être positionnée sur le support (10) en position de réception d'une goulotte en étant orientée vers le haut suivant une direction générale oblique par rapport au support (10), et à être basculée vers le bas sous la sollicitation de la goulotte (100) placée en appui sur la console (220), pour s'enclencher élastiquement dans le support (10) en se positionnant contre ladite goulotte (100) de façon à ce que cette dernière soit enserrée entre la coiffe (210) et la console (220).

10. Dispositif selon la revendication 9, **caractérisé en ce que** lesdits moyens de positionnement (300') et de montage (300") comprennent, à l'arrière de la coiffe (210), une patte de positionnement (300') en forme de marche d'escalier destinée à venir se bloquer dans un premier orifice (14) d'une première partie (12) du support (10), et, à distance de cette patte de positionnement (300'), une agrafe élastique de verrouillage (300") destinée, lors du basculement de la coiffe (210), à s'introduire par déformation élastique dans un deuxième orifice (13) d'une deuxième partie (11) du support (10) perpendiculaire à ladite première partie (12), pour venir en butée à l'intérieur du support (10).

11. Dispositif selon la revendication 10, **caractérisé en ce que** la patte de positionnement (300') et l'agrafe élastique de verrouillage (300") viennent de formation avec ladite coiffe (210).

12. Dispositif selon l'une quelconque des revendications précédentes, **caractérisé en ce que** la console (220) et la coiffe (210) sont réalisées en matière métallique.

13. Dispositif selon l'une quelconque des revendications 1 à 11, **caractérisé en ce que** la console (220) et la coiffe (210) sont réalisées en matière plastique.

## Claims

1. Device for fixing trunking (100) to a support (10) adapted to enable the trunking to be installed in an offset manner relative to a wall, **characterised in that** it includes:
- a bracket (220) adapted to be hooked onto the front of the support (10) and intended to have said trunking (100) rest on it, and
- a cap (210) provided with means (300) for locating and mounting it by elastic engagement in at least one orifice (14) provided on the support (10).

2. Device according to claim 1, **characterised in that** said locating and mounting means (300) are such that said cap (210) can be positioned on the support (10) in a position for receiving the trunking (100) upwardly oriented in alignment with the support (10) and to be moved downward in translation after resting the trunking (100) on the bracket (220) to engage elastically in the support (10) and against said trunking so that the latter is gripped between the cap (210) and the bracket (220).

3. Device according to either of claims 1 or 2, **characterised in that** said locating and mounting means comprise an elastic branch (320) provided at the rear of the cap (210) and articulated by means of an articulation hinge (323) fastened to the cap (210) between a stable deployed position and a bent position for introducing it into said orifice (14) of the support (10).

4. Device according to claim 3, **characterised in that** said elastic branch (320) includes, on the one hand, at its base, near the articulation hinge (323), a projection (321) intended to cooperate in abutment with an edge of said orifice (14) of the support (10) to hold said cap (210) in the trunking receiving position and, on the other hand, at its free end, a wedge-shaped return (322) intended to be pressed against the edge of said orifice (14) of the support (10) to lock said cap (210) in position against the trunking (100) so that the latter is gripped between the cap (210) and the bracket (220).

5. Device according to claim 4, **characterised in that** said projection is a boss (321) formed in said elastic branch (320).

6. Device according to any of claims 3 to 5, **characterised in that** said elastic branch (320) and its articulation hinge (323) form part of a clip (300) attached to a rear portion of the cap (210).

7. Device according to claim 6, **characterised in that** said clip (300) is clipped onto the cap (210).

8. Device according to any of the preceding claims, **characterised in that** the cap (210) comprises, at the front, a rim (212) intended to be pressed against a right-angle return (103) of a lateral flange (102) of the trunking (100) and, at the rear, three lugs (213, 214) disposed in a podium arrangement with a central lug (214) carrying the locating and mounting means (300) and intended to be engaged in the orifice (14) of the support (10) and, on respective opposite sides of this central lug (214), two lateral lugs (213) adapted to be positioned against said support (10).

9. Device according to claim 1, **characterised in that** said locating means (300') and said mounting means (300") are such that said cap (210) can be placed on the support (10) in the trunking receiving position upwardly oriented in a generally oblique direction relative to the support (10) and pivoted downward by resting the trunking (100) on the bracket (220) so as to clip elastically into the support (10) and against said trunking (100) so that the latter is gripped between the cap (210) and the bracket (220).

10. Device according to claim 9, **characterised in that** said locating means (300') and said mounting means (300") comprise at the rear of the cap (210) a step-shaped locating lug (300') intended to be immobilised in a first orifice (14) of a first part (12) of the support (10) and an elastic locking clip (300") at a distance from this locating lug (300') intended, when the cap (210) pivots, to be introduced by elastic deformation into a second orifice (13) of a second part (11) of the support (10) perpendicular to said first part (12) so as to abut against the interior of the support (10).

11. Device according to claim 10, **characterised in that** the locating lug (300') and the elastic locking clip (300") are formed with said cap (210).

12. Device according to any of the preceding claims, **characterised in that** the bracket (220) and the cap (210) are produced in metal.

13. Device according to any of claims 1 to 11, **characterised in that** the bracket (220) and the cap (210) are produced in plastic material.

## Patentansprüche

1. Vorrichtung zur Befestigung eines Kabelkanals (100) auf einem Träger (10), die die versetzte Anbringung des Kabelkanals bezüglich einer Wand erlaubt, **dadurch gekennzeichnet, dass** sie umfasst:
- eine Konsole (220), die stirnseitig an den Träger (10) gehängt zu werden vermag und dazu bestimmt ist, den Kabelkanal (100) aufliegend aufzunehmen, und
- eine Abdeckung (210), die mit Positionierungs- und Montagemitteln (300) durch elastisches Einrasten in wenigstens einer auf dem Träger (10) vorgesehenen Öffnung (14) versehen ist.

2. Vorrichtung nach Anspruch 1,
**dadurch gekennzeichnet, dass** die Positionierungs- und Montagemittel (300) so ausgebildet sind, dass die Abdeckung (210) auf dem Träger (10) in einer Position zur Aufnahme eines Kabelkanals (100) nach oben ausgerichtet mit dem Träger fluchtend positioniert und nach Auflage des Kabelkanals (100) auf der Konsole (220) nach unten verschoben zu werden vermag, um in den Träger (10) elastisch einzurasten und sich dabei an dem Kabelkanal so zu positionieren, dass dieser zwischen die Abdeckung (210) und die Konsole (220) geklemmt ist.

3. Vorrichtung nach einem der Ansprüche 1 oder 2,
**dadurch gekennzeichnet, dass** die Positionierungs- und Montagemittel einen elastischen Schenkel (320) aufweisen, der an der Rückseite der Abdeckung (210) vorgesehen und mit Hilfe eines mit der Abdeckung (210) fest verbundenen Gelenkscharniers (323) zwischen einer stabilen ausgeklappten Stellung und einer zum Einführen in die Öffnung (14) des Trägers (10) umgeklappten Stellung gelenkig angebracht ist.

4. Vorrichtung nach Anspruch 3,
**dadurch gekennzeichnet, dass** der elastische Schenkel (320) einerseits an seiner Basis in der Nähe des Gelenkscharniers (323) einen Vorsprung (321) aufweist, der im Anschlag mit einem Rand der Öffnung (14) des Trägers (10) zusammenzuwirken vermag, um die Abdeckung (210) in der Position zur Aufnahme des Kabelkanal zu halten, und andererseits an seinem freien Ende eine keilförmigen Umbiegung (322) aufweist, die dazu bestimmt ist, gegen den Rand der Öffnung (14) des Trägers (10) gedrückt zu werden, um die Abdeckung (210) in dieser Position so gegen den Kabelkanal (100) zu klemmen, dass dieser zwischen die Abdeckung (210) und die Konsole geklemmt ist.

5. Vorrichtung nach Anspruch 4,
**dadurch gekennzeichnet, dass** der Vorsprung eine in dem elastischen Schenkel (320) ausgebildete Vorwölbung (321) ist.

6. Vorrichtung nach einem der Ansprüche 3 bis 5,
**dadurch gekennzeichnet, dass** der elastische Schenkel (320) und sein Gelenkscharnier (323) Teil einer Klammer (300) sind, die an einem rückwärtigen Teil der Abdeckung (210) angesetzt ist.

7. Vorrichtung nach Anspruch 6,
**dadurch gekennzeichnet, dass** die Klammer (300) auf der Abdeckung (210) eingerastet ist.

8. Vorrichtung nach einem der vorhergehenden Ansprüche,
**dadurch gekennzeichnet, dass** die Abdeckung (210) vorne einen Rand (212) aufweist, der dazu bestimmt ist, gegen eine rechtwinklige Umbiegung (103) eines Seitenflügels (102) des Kabelkanals (100) zu drücken, und hinten drei podestartig angeordnete Laschen (213, 214), mit einer mittleren Lasche (214), die mit den Positionierungs- und Montagemitteln (300) versehen und zum Eingreifen in die Öffnung (14) des Trägers (10) bestimmt ist, und beidseits der mittleren Lasche (214) mit zwei seitlichen Laschen (213), die dazu bestimmt sind, an dem Träger (10) positioniert zu werden.

9. Vorrichtung nach Anspruch 1,
**dadurch gekennzeichnet, dass** die Positionierungs- (300') und Montagemittel (300") so ausgebildet sind, dass die Abdeckung (210) auf dem Träger (10) in einer Position zur Aufnahme eines Kabelkanals in einer bezüglich des Trägers (10) allgemein schräg verlaufende Richtung nach oben ausgerichtet positioniert und bei Beanspruchung des auf der Konsole (220) aufliegend platzierten Kabelkanals (100) nach unten geschwenkt zu werden vermag, um elastisch in den Träger (10) einzurasten und sich hierbei an dem Kabelkanal (100) so zu positionieren, dass dieser zwischen die Abdeckung (210) und die Konsole (220) geklemmt ist.

10. Vorrichtung nach Anspruch 9,
**dadurch gekennzeichnet, dass** die Positionierungs- (300') und Montagemittel (300") an der Rückseite der Abdeckung (210) eine stufenförmige Positionierungslasche (300') zum Festklemmen in einer ersten Öffnung (14) eines ersten Teils (12) des Trägers (10) und von dieser Positionierungslasche (300') beabstandet eine elastische Verriegelungsklammer (300") aufweisen, die dazu bestimmt ist, beim Schwenken der Abdeckung (210) durch elastische Verformung in eine zweite Öffnung (13) eines zum ersten Teil (12) lotrechten zweiten Teils (in) des Trägers (10) eingeführt zu werden, um innen im Träger (10) in Anschlag zu gelangen.

11. Vorrichtung nach Anspruch 10,
**dadurch gekennzeichnet, dass** die Positionierungslasche (300') und die elastische Verriegelungsklammer (300") mit der Abdeckung (210) einstückig angeformt sind.

12. Vorrichtung nach einem der vorhergehenden Ansprüche,
**dadurch gekennzeichnet, dass** die Konsole (220) und die Abdeckung (210) aus Metall ausgeführt sind.

13. Vorrichtung nach einem der Ansprüche 1 bis 11,
**dadurch gekennzeichnet, dass** die Konsole (220) und die Abdeckung (210) aus Kunststoff ausgeführt sind.
